# EUROPÄISCHE PATENTSCHRIFT

(11) **EP 1 969 241 B1**
(45) Veröffentlichungstag und Bekanntmachung des Hinweises auf die Patenterteilung: **16.04.2014**
(21) Anmeldenummer: 06829240.8
(22) Anmeldetag: 01.12.2006
(51) Int. Cl.: F16B 19/10

(54) **VORRICHTUNG ZUM BEFESTIQEN EINES ANBAUTEILES AN EINEM TRÄGERTEIL**
DEVICE FOR FASTENING AN ATTACHMENT TO A SUPPORT PART
DISPOSITIF DE FIXATION D'UNE PIECE SUR UN ELEMENT DE SUPPORT

(30) Priorität: 24.12.2005 DE 102005062242
(43) Veröffentlichungstag der Anmeldung: 17.09.2008
(73) Patentinhaber: A. RAYMOND ET CIE, 38000 Grenoble (FR)
(72) Erfinder: HAUSER, Ingo, 79400 Kandern (DE)
(74) Vertreter: RACKETTE Partnerschaft Patentanwälte
(86) Internationale Anmeldenummer: PCT/EP2006/011572
(87) Internationale Veröffentlichungsnummer: WO 2007/073821

(56) Entgegenhaltungen:
- EP-A1- 1 502 828
- FR-A- 2 075 179

## Beschreibung

Die Erfindung betrifft eine Vorrichtung zum Befestigen eines Anbauteiles an einem Trägerteil gemäß dem Oberbegriff des Patentanspruches 1.

Eine derartige Vorrichtung ist aus EP 1 502 828 A1 bekannt. Die vorbekannte Vorrichtung zum Befestigen eines Anbauteiles an einem Trägerteil verfügt über einen seitlich überstehende Rastvorsprünge sowie einen Stiftaufnahmeschaft aufweisenden Nietstift. Die Rastvorsprünge hintergreifen in einer Endmontagestellung das Trägerteil. Weiterhin ist ein in dem Stiftaufnahmeschaft zwischen einer Freigabestellung und einer Blockierstellung verschiebbar gelagerter Blockierstift vorhanden. Die Rastvorsprünge sind aufgrund von an drei Seiten von einem in Einführrichtung des Blockierstiftes vorderseitig gelegenen Bereich in Richtung des in Einführrichtung des Blockierstiftes rückseitig gelegenen Bereiches umlaufenden Freimachungen an federnden Zungenabschnitten ausgebildet. Der Blockierstift blockiert eine radiale Bewegung der Rastvorsprünge in der Blockierstellung, in der er mit seinem in Einführrichtung vorderen Ende über den Anbindungsbereich der Zungenabschnitte hinaus tief in den Stiftausnahmeschaft eingefügt ist.

Aus FR 2 075 179 A ist eine Vorrichtung zum Befestigen eines Anbauteiles an einem Trägerteil bekannt, die über ein mit dem Anbauteil über Verbindungsmittel verbindbares Lagerteil, über einen in einer Nietausnehmung des Lagerteiles zwischen einer Vormontagestellung und einer Endmontagestellung verschiebbar gelagerten, seitlich überstehende Rastvorsprünge sowie einen Stiftaufnahmeschaft aufweisenden Nietstift verfügt, wobei die Rastvorsprünge in der Endmontagestellung das Trägerteil hintergreifen, und über einen in dem Stiftaufnahmeschaft zwischen einer Freigabestellung und einer Blockierstellung verschiebbar gelagerten Blockierstift. Der Blockierstift blockiert in der Blockierstellung eine radiale Bewegung der Rastvorsprünge, die an den freien Enden von langen, in Einführrichtung rückseitig angebundenen freien Enden von langen, in Einführrichtung rückseitig angebundenen Federstiften angeformt sind. Aus diesem Grund muss für ein sicheres Blockieren der Blockierstift nahezu bis zu dem Ende des Stiftaufnahmeschaftes eingeschoben werden.

Aus DE 31 14 283 A1 ist eine Vorrichtung zum Befestigen eines Anbauteiles an einem Trägerteil bekannt, die einen mit einem Trägerteil verbindbaren Nietkörper aufweist, der mit einem sich in Längsrichtung des Nietkörpers erstreckenden durchgehenden Aufnahmeschacht ausgebildet ist. In dem Aufnahmeschacht ist ein Stiftkörper verschiebbar gelagert, der mit einem Anbauteil in Eingriff bringbar ist, das mittels der vorbekannten Vorrichtung mit dem Trägerteil verbunden werden soll. Nach Einschieben des Stiftkörpers in den Nietkörper hintergreifen endseitig an dem Stiftkörper ausgebildete Vorsprünge das von dem Trägerteil wegweisende Ende des Nietkörpers, so dass das Anbauteil in einer Endmontagestellung an dem Trägerteil befestigt ist.

Der Erfindung liegt die Aufgabe zugrunde, bei einer Vorrichtung der eingangs genannten Art ein sicheres Blockieren der Rastvorsprünge bei einem sehr geringen Einschiebeweg für den Blockierstift zu gewährleisten.

Diese Aufgabe wird bei einer Vorrichtung der eingangs genannten Art erfindungsgemäß mit den kennzeichnenden Merkmalen des Patentanspruches 1 gelöst.

Durch die erfindungsgemäße Ausgestaltung nimmt der Blockierstift bereits nach einem sehr geringen Einschiebeweg seine Blockierstellung ein, was die Handhabung beim Befestigen und beim bedarfsweisen Lösen der ingesamt dreiteiligen Vorrichtung wesentlich erleichtert.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer Seitenansicht ein Ausführungsbeispiel einer erfindungsgemäßen Vorrichtung, das mit einem Anbauteil verbunden ist,
- Fig. 2: im Schnitt das Ausführungsbeispiel gemäß Fig. 1 mit einem Lagerteil in einer Vormontagestellung und einem Blockierstift in einer Freigabestellung und
- Fig. 3: das Ausführungsbeispiel gemäß Fig. 1 und Fig. 2 in Eingriff mit einem Anbauteil und einem Trägerteil, wobei das Lagerteil in einer Endmontagestellung und der Blockierstift in einer Blockierstellung sind.

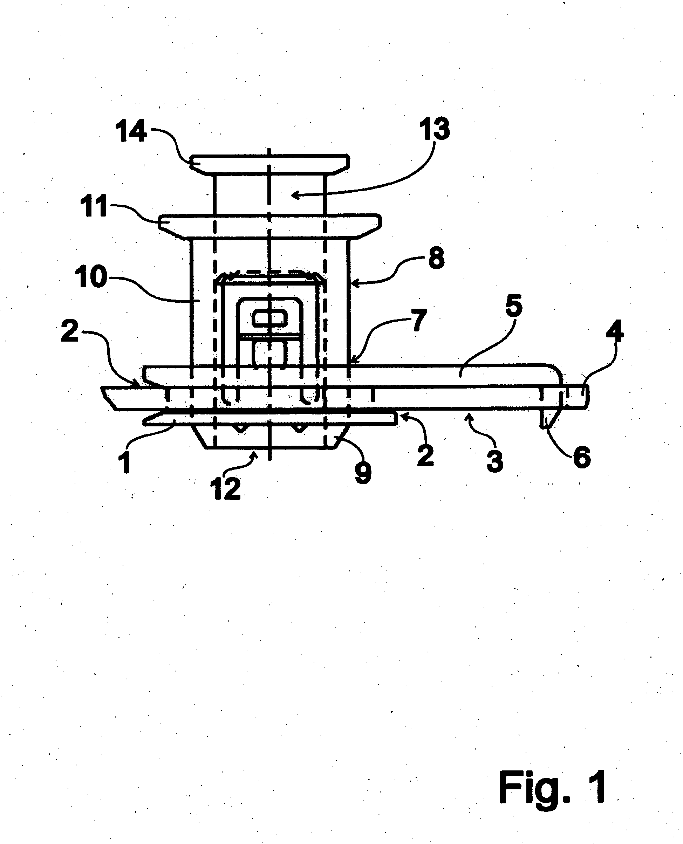

Fig. 1 zeigt in einer Seitenansicht ein Ausführungsbeispiel einer erfindungsgemäßen Vorrichtung, die über ein Lagerteil 1 verfügt. In der Darstellung gemäß Fig. 1 ist das Lagerteil 1 mit Nuten 2 als Verbindungsmitteln in einem schmalen Endbereich einer in etwa tropfenförmig ausgebildeten Lagerausnehmung 3 eines Anbauteiles 4 angeordnet. Die an dem Lagerteil 1 angeformten Verbindungsmittel verfügen weiterhin über einen abstehenden, federnden Rastarm 5, an dessen freien Ende eine abgewinkelte Anschlagnase 6 ausgebildet ist, die in einen umfänglich erweiterten, zum Einfügen der erfindungsgemäßen Vorrichtung ausgebildeten Bereich einer Randseite der Lagerausnehmung 3 gegenüberliegend angeordnet ist, so dass das Lagerteil 1 nach Einschnappen der Anschlagnase 6 in die Lagerausnehmung 3 fixiert ist.

Das Lagerteil 1 verfügt über eine quer zu dem Rastarm 5 ausgerichtete Nietausnehmung 7, in die in der Darstellung gemäß Fig. 1 ein Nietstift 8 in einer Vormontagestellung angeordnet ist. In der Vormontagestellung steht der Nietstift 8 mit einem angeschrägten Zentrierkopf 9 über das Lagerteil 1 über, während ein Schaftabschnitt 10 des Nietstiftes 8 auf der dem Zentrierkopf 9 gegenüberliegenden. Seite über das Lagerteil 1 hinausragt. Der Schaftabschnitt 10 ist auf seiner von dem Zentrierkopf 9 abgewandten Seite mit einem radial überstehenden Anlagerand 11 abgeschlossen. Der Nietstift 8 ist mit einem mittig angeordneten, beidseitig offenen Stiftaufnahmeschaft 12 ausgebildet, in dem in Längsrichtung verschiebbar ein in der Darstellung gemäß Fig. 1 in einer Freigabestellung angeordneter Blockierstift 13 gelagert ist. Der Blockierstift 13 verfügt ebenfalls an seinem von dem Nietstift 8 abgewandten Ende über einen radial überstehenden Anlagerand 14.

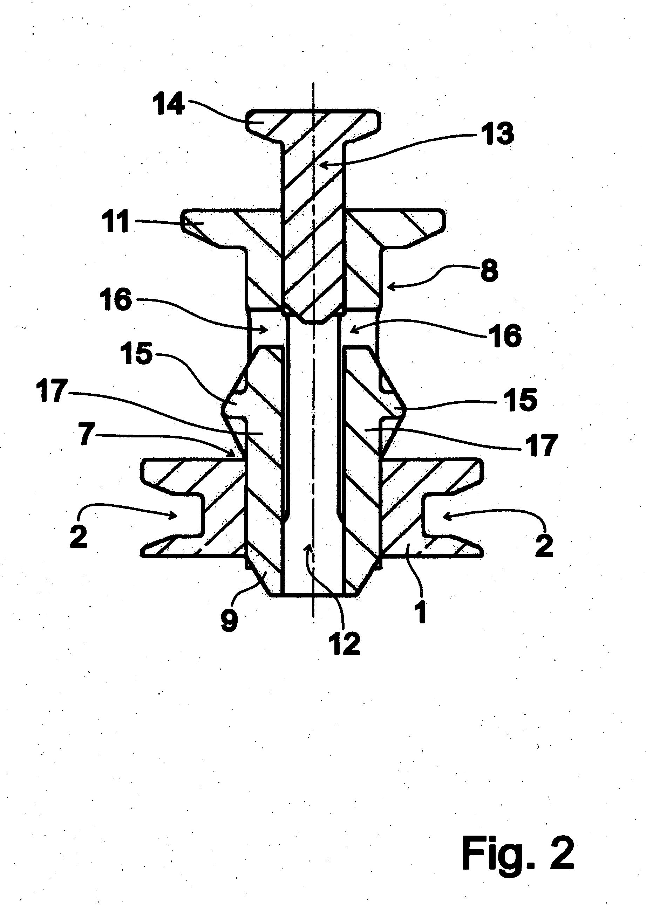

Fig. 2 zeigt das Ausführungsbeispiel gemäß Fig. 1 im Schnitt mit Blick auf die dem in Fig. 2 nicht sichtbaren Rastarm 5 abgewandte Seite. Aus Fig. 2 ist ersichtlich, dass der Nietstift 8 über seitlich überstehende Rastvorsprünge 15 verfügt, die in der Vormontagestellung des Nietstiftes 8 gemäß Fig. 1 und Fig. 2 an dem Rand der Nietausnehmung 7 des Lagerteiles 8 anliegen. Die Rastvorsprünge 15 sind aufgrund von an drei Seiten umlaufenden Freimachungen 16 an federnden Zungenabschnitten 17 ausgebildet, so dass bei Überführen des Nietstiftes 8 von der in Fig. 1 und Fig. 2 dargestellten Vormontagestellung in eine Endmontagestellung, in der, der Anlagerand 11 des Nietstiftes 8 an dem Lagerteil 1 anliegt, die Rastvorsprünge 15 durch die Nietausnehmung 7 durchtreten und nach Durchqueren der Nietausnehmung 7 am gegenüberliegenden Ende wieder ausfedemd austreten.

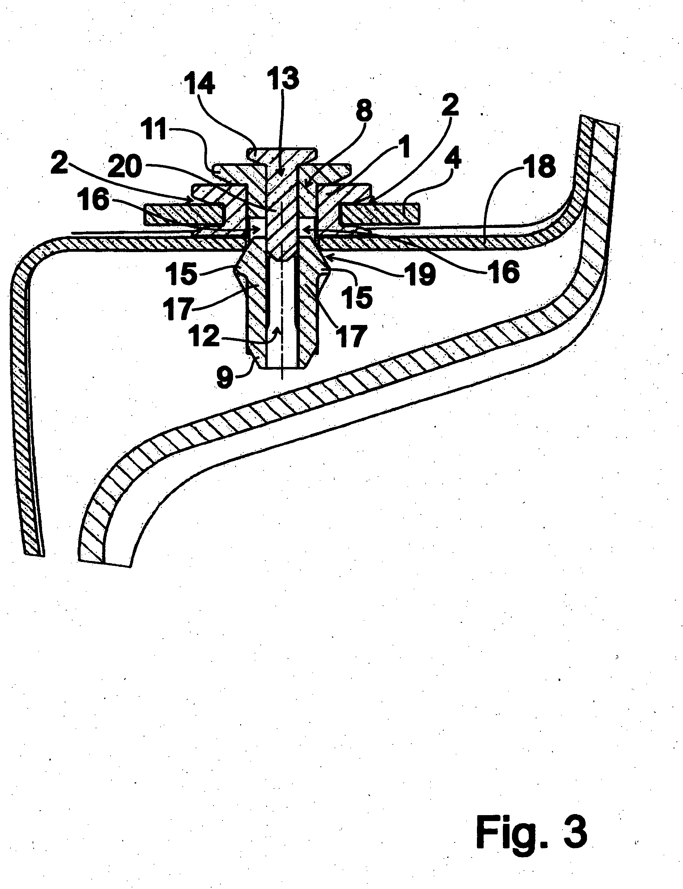

Fig. 3 zeigt das Ausführungsbeispiel gemäß Fig. 1 und Fig. 2 im Eingriff mit einem Trägerteil 18, an dem das Anbauteil 4 zu befestigen ist. In der Anordnung gemäß Fig. 3 befindet sich der Nietstift 8 in der Endmontagestellung, in der dessen Anlagerand 11 an dem Lagerteil 1 anliegt und die Rastvorsprünge 15 einen Rand einer in dem Trägerteil 18 eingebrachten Aufnahmeausnehmung 19 hintergreifen. Weiterhin befindet sich in der Darstellung gemäß Fig. 3 der Blockierstift 13 in einer Blockierstellung, in der dessen Anlagerand 14 an dem Anlagerand 11 des Nietstiftes 8 anliegt und das freie Ende eines sich von dem Anlagerand 14 wegerstreckenden Schaftabschnitts 20 so weit in den Stiftaufnahmeschaft 12 hineinragt, dass eine Bewegung der Zungenabschnitte 17 aufeinander zu blockiert ist.

Dadurch ist das Anbauteil 4 fest mit dem Trägerteil 18 verbunden, nachdem in einem mehrstufigen Montagevorgang, nämlich ausgehend von der Anordnung gemäß Fig.1 das Anbauteil 4 unter Eingriff des Zentrierkopfes 9 in die Aufnahmeausnehmung 19 und Überführen des Nietstiftes 8 von der Vormontagestellung in die Endmontagestellung zunächst vorausgerichtet fixierbar ist und nach Einnehmen der endgültigen Anordnung durch Überführen des Blocklerstiftes 13 von der Freigabestellung gemäß Fig. 1 und Fig. 2 in die Blockierstellung gemäß Fig. 3 die endgültige betriebssichere Verbindung zwischen dem Anbauteil 4 und dem Trägerteil 18 sicherstellt.

Zum Lösen der Verbindung zwischen dem Anbauteil 4 und dem Trägerteil 18 lässt sich der Blockierstift 18 beispielsweise durch entsprechende Manipulation an dessen Anlagerand 14 von der Blockierstellung gemäß Fig. 3 zurück in die Freigabestellung gemäß Fig. 1 und Fig. 2 überführen, so dass anschließend der Nietstift 8 von der Endmontagestellung gemäß Fig. 3 ebenfalls wieder zurück in die Vormontagestellung gemäß Fig. 1 und Fig. 2 mit dem Durchtreten der Rastvorsprünge 15 durch die Aufnahmeausnehmung 19 sowie durch den Stiftaufnahmeschaft 12 überführbar ist.

## Patentansprüche

1. Vorrichtung zum Befestigen eines Anbauteiles (4) an einem Trägerteil (18) mit einem seitlich überstehende Rastvorsprünge (15) sowie einen Stiftaufnahmeschaft (12) aufweisenden Nietstift (8), wobei die Rastvorsprünge (15) in der Endmontagestellung das Trägerteil (18) hintergreifen, und mit einem in dem Stiftaufnahmeschaft (12) zwischen einer Freigabestellung und einer Blockierstellung verschiebbar gelagerten Blockierstift (13), wobei der Blockierstift (13) in der Blockierstellung eine radiale Bewegung der Rastvorsprünge (15) blockiert und wobei die Rastvorsprünge (15) aufgrund von an drei Seiten von einem in Einführrichtung des Blockierstifts (13) vorderseitig gelegenen Bereich in Richtung des in Einführrichtung des Blockierstifts (13) rückseitig gelegenen Bereiches umlaufenden Freimachungen (16) an federnden Zungenabschnitten (17) ausgebildet sind, **dadurch gekennzeichnet, dass** ein mit dem Anbauteil (4) über Verbindungsmittel (2, 5) verbindbares Lagerteil (1) vorhanden ist, das mit einer Nietausnehmung (7) ausgebildet ist, in der der Nietstift (8) zwischen einer Vormontagestellung und einer Endmontagestellung verschiebbar gelagert ist, und dass der Blockierstift (13) in der Blockierstellung so weit in den Stiftaufnahmeschaft (12) hineinragt, dass er mit seinem in Einführrichtung vorderen Ende in Höhe der freien Enden der Zungenabschnitte (17) angeordnet ist, so dass eine Bewegung der Zungenabschnitte (17) aufeinander zu blockiert ist.

2. Vorrichtung nach Anspruch 1, **dadurch gekennzeichnet, dass** der Nietstift (8) und der Blockierstift (13) radial überstehende Anlageränder (11, 14) aufweisen, wobei der Anlagerand (11) des Nietstiftes (8) in dessen Endmontagestellung an dem Lagerteil (1) und der Anlagerand (14) des Blockierstiftes (13) in dessen Blockierstellung an dem Nietstift (8) anliegen.

3. Vorrichtung nach Anspruch 1 oder Anspruch 2, **dadurch gekennzeichnet, dass** der Nietstift (8) einen angeschrägten Zentrierkopf (9) aufweist, der in der Vormontagestellung des Nietstiftes (8) über das Lagerteil (1) vorsteht.

4. Vorrichtung nach einem der Ansprüche 1 bis 3, **dadurch gekennzeichnet, dass** die Verbindungsmittel (2) an dem Lagerteil (1) angeformt sind.

## Claims

1. Device for fastening an added part (4) to a carrying part (18), having a rivet pin (8) which has latching projections (15) protruding laterally and a pin-receiving shank (12), the latching projections (15) fitting behind the carrying part (18) in the fully fitted position, and having a blocking pin (13) which is mounted to be displaceable in the pin-receiving shank (12) between a releasing position and a blocking position, the blocking pin (13) blocking radial movement of the latching projections (15) in the blocking position, and the latching projections (15) being formed on resilient tongue portions (17) due to apertures (16) which extend round on three sides from a region situated at the front in the direction of insertion of the blocking pin (13) towards the region situated at the rear in the direction of insertion of the blocking pin (13), **characterised in that** there is a mounting part (1) which can be connected to the added part (4) by connecting means (2, 5) and which is formed to have a rivet opening (7) in which the rivet pin (8) is mounted to be displaceable between a preliminary fitted position and a fully fitted position, and **in that**, in the blocking position, the blocking pin (13) projects into the pin-receiving shank (12) sufficiently far for its end which is at the front in the direction of insertion to be arranged on a level with the free ends of the tongue portions (17), thus blocking movement of the tongue portions (17) towards one another.

2. Device according to claim 1, **characterised in that** the rivet pin (8) and the blocking pin (13) have radially projecting rims for abutment (11, 14), the rim for abutment (11) of the rivet pin (8) resting, in the latter's fully fitted position, against the mounting part (1) and the rim for abutment (14) of the blocking pin (13) resting, in the latter's blocking position, against the rivet pin (8).

3. Device according to claim 1 or claim 2, **characterised in that** the rivet pin (8) has a bevelled locating tip (9) which projects beyond the mounting part (1) when the rivet pin (8) is in the preliminary fitted position.

4. Device according to one of claims 1 to 3, **characterised in that** the connecting means (2) are integrally formed on the mounting part (1).

## Revendications

1. Dispositif de fixation d'un composant rapporté (4) sur un élément faisant office de support (18), comprenant des protubérances de mise en prise d'encastrement (15) faisant saillie dans le plan latéral ainsi qu'une queue de rivet (8) définissant un logement d'emmanchement de tige (12), dans lequel les protubérances de mise en prise d'encastrement (15) viennent, dans la position d'insertion à fond de course, cramponner par derrière l'élément faisant office de support (18), et comprenant une tige de blocage (13) disposée avec la possibilité de pouvoir être déplacée entre une position de dégagement et une position de blocage, la tige de blocage (13) empêchant en l'occurrence, dans sa position de blocage, les protubérances de mise en prise d'encastrement (15) de se déplacer dans le plan radial et dans lequel les protubérances de mise en prise d'encastrement (15) sont, en raison de dégagements (16) s'étendant de manière périphérique sur trois côtés depuis une zone se situant sur le devant dans la direction d'insertion de la tige de blocage (13) vers la zone se situant sur l'arrière dans la direction d'insertion de la tige de blocage (13), réalisés en tant que parties intégrantes de portions formant languettes élastiques (17), **caractérisé en ce qu'**il est prévu un élément formant portée d'appui (1) pouvant être raccordé au composant rapporté (4) par l'intermédiaire de moyens de liaison (2, 5), élément qui comporte un évidement d'emmanchement de rivet (7) dans lequel la partie mâle du rivet (8) peut être déplacée entre une position de présentation et une position d'insertion à fond de course, et **en ce que** la tige de blocage (13) pénètre, dans sa position de blocage, dans le logement d'emmanchement de tige (12) dans une proportion telle qu'elle arrive, au niveau de son extrémité antérieure, à hauteur des extrémités libres des portions formant languettes élastiques (17), faisant ainsi en sorte que les portions formant languettes élastiques (17) sont mises dans l'impossibilité de se rapprocher l'une de l'autre.

2. Dispositif selon la revendication 1, **caractérisé en ce que** la partie mâle du rivet (8) et la tige de blocage (13) comportent des rebords formant portées d'appui (11, 14) faisant saillie dans le plan radial, le rebord formant portée d'appui (11) de la partie mâle du rivet (8) se trouvant en l'occurrence, dans sa position d'emmanchement en fin de course, en contact d'application sur l'élément formant portée d'appui (1) et le rebord formant portée d'appui (14) de la tige de blocage (13), dans sa position de blocage, en contact d'application sur la partie mâle du rivet (8).

3. Dispositif selon la revendication 1 ou la revendication 2, **caractérisé en ce que** la partie mâle du rivet (8) comporte une tête de centrage biseautée (9) qui, lorsque la partie mâle du rivet (8) se trouve dans sa position de présentation, fait saillie au-dessus de l'élément formant portée d'appui (1).

4. Dispositif selon l'une des revendications 1 à 3, **caractérisé en ce que** les moyens de liaison (2) sont réalisés solidaires par moulage de l'élément formant portée d'appui (1).
